# EUROPEAN PATENT APPLICATION

(11) **EP 4 513 584 A1**
(43) Date of publication of application: **26.02.2025**
(21) Application number: 23796869.8
(22) Date of filing: 27.04.2023
(51) Int. Cl.: H01M 4/13, H01M 4/139, H01M 4/38, H01M 10/052, C08L 65/00, C08K 5/1515, H01M 4/02

(54) **ELECTRODE PROTECTION LAYER BASED ON CARBOXYLATED POLYMER OF INTRINSIC MICROPOROSITY, AND MANUFACTURING METHOD THEREFOR**

(30) Priority: 29.04.2022 KR 20220053793; 25.04.2023 KR 20230054353
(71) Applicant: Korea Research Institute of Chemical Technology, Daejeon 34114 (KR)
(72) Inventor: KIM, Byoung Gak, Daejeon 34114 (KR); JEON, Jun Woo, Daejeon 34114 (KR)
(74) Representative: Hoffmann Eitle
(86) International application number: PCT/KR2023/005823
(87) International publication number: WO 2023/211227

(57) **Abstract**

The present invention relates to an electrode protection layer based on a carboxylated polymer of intrinsic microporosity, and a manufacturing method therefor, and, more specifically, to an electrode protection layer based on a polymer of intrinsic microporosity, and a manufacturing method therefor, the layer being manufactured by mixing a carboxylated polymer of intrinsic microporosity with a cross-linking agent and a solvent so as to form a film-forming composition, forming a film therefrom, and then cross-linking the film.

## Description

### TECHNICAL FIELD

The present disclosure relates to an electrode protection layer based on carboxylated polymer of intrinsic microporosity and a method for manufacturing the same.

More particularly, the present disclosure relates to a cross-linked polymer film electrode protection layer based on polymer of intrinsic microporosity formed by mixing carboxylated polymer of intrinsic microporosity with a cross-linking agent and a solvent to prepare a film-forming composition, applying the film-forming composition to electrode surface, and drying the solvent at room temperature to cause cross-linking reaction and a method for manufacturing the same.

The present application claims priority to Korean Patent Application No. 10-2022-0053793 filed on April 29, 2022 and Korean Patent Application No. 10-2023-0054353 filed on April 25, 2023 in the Republic of Korea, the disclosures of which are incorporated herein by reference.

### BACKGROUND

With growing demand for high capacity energy storage devices for use in electric vehicles, smart electronic devices and drones, significant efforts are being made towards technology development using lithium (Li) metal as an anode material. Compared to the current commercially available carbon-based anode (372 mAh g⁻¹), the lithium metal is used as the anode due to high theoretical capacity of 3860 mAh g⁻¹, low standard reduction potential (-3.04 V vs. standard hydrogen electrode (SHE)) and low density of 0.534 g cm⁻³.

Based on these advantages, batteries using lithium metal as anodes were commercialized in the 1980s, but explosions occurred in batteries while in use due to instability of the lithium metal anode, and measures have been taken to retrieve all batteries. Accordingly, to commercialize secondary batteries using the advantages of the lithium metal anode, it may be very important to ensure stability of the lithium metal anode.

Here, the instability of the lithium metal anode results from sharp lithium dendrite formed during charging and discharging. Specifically, a local difference in current density occurs due to non-uniformity of a Solid Electrolyte Interphase (SEI) layer which is a passivation layer naturally formed by reaction with electrolytes on the lithium metal anode surface during charging and discharging, and the non-uniform current distribution causes the growth of lithium metal into sharp dendrite during charging. Additionally, lithium of the grown dendrite becomes dead lithium, causing Coulombic efficiency reduction of the batteries, and in worse cases, internal short circuit-induced explosions, so it is necessary to ensure long-term life and stability of batteries.

To ensure lithium dendrite stability and long-term life, many studies are being made towards artificial anode protection layer (artificial SEI) introduction, new electrolyte and additive introduction, metal current collector structure design, nucleation adjustment, etc. Among them, the introduction of the artificial anode protection layer is a method that introduces the SEI layer which is the a passivation layer favorable for lithium movement and interfacial characteristics on the lithium metal surface, and primarily uses polymer favorable for lithium ion conduction and interfacial characteristics.

The representative lithium ion conducting polymer as the anode protection layer primarily includes a variety of ion conducting polymers including poly(ethyleneoxide) (PEO), poly(propyleneoxide) (PPO). The poly(ethyleneoxide) (PEO) polymer is polymer including an ether group that can interact with lithium ions, and has a structure in which crystalline and amorphous regions co-exist at room temperature. This polymer is favorable for dissolution of lithium salts and movement of lithium ions due to flexibility of the amorphous region at higher temperature than the glass transition temperature, but is not favorable for movement of lithium ions in crystalline phase. By this reason, PEO shows lithium ion conductivity of nonconductor level as low as 10⁻⁸ to 10⁻⁹ S/cm at room temperature, and the PEO polymer cannot be applied to commercially available batteries. Accordingly, to develop PEO based materials high ionic conductivity, many studies are being made to reduce the degree of crystallinity through diverse approaches, for example, introducing organic·inorganic particles and plasticizers, increasing the amount of lithium salts, manufacturing copolymers. However, these efforts to reduce the degree of crystallinity may be accompanied by mechanical properties degradation. To put the PEO based materials for batteries to practical use, there is a need for the outcome that meets ionic conductivity and mechanical properties at the same time.

Besides, many studies are being made towards materials such as Covalent Organic Framework (COF) and Polymer of Intrinsic microposity (PIM) using micropores favorable for movement of lithium ions. In particular, the polymer of intrinsic microporosity is a material that possesses a large number of micropores having the pore size of about 1 nm favorable for movement of lithium ions, and can easily introduce a polymer thin-film layer on lithium metal surface through a solution process. Many studies are being made towards an anode protection film using the polymer of intrinsic microporosity, but due to poor interfacial characteristics between the polymer of intrinsic microporosity and the lithium metal anode, an empty space is formed between the electrode and the polymer based electrode protection layer (see Korean Patent No. 10-0542213, Korean Patent Publication No. 10-2017-0117649, Korean Patent Publication No. 10-2019-0033922, Korean Patent No. 10-0655674, and Putintseva, M.N., Yushkin, A. A., Bondarenko, G.N. et al. Cross-linking of Polybenzodioxane PIM-1 for Improving Its Stability in Aromatic Hydrocarbons. Polym. Sci. Ser. B 61, 795-805 (2019).). When liquid electrolytes are used, additive SEI layer formation and electrolyte consumption through side reaction may occur in the empty space, so there is a need for polymer electrode protection films for minimizing and removing the empty space.

Accordingly, the inventors developed a lithium metal anode protection film for inducing uniform movement of lithium ions by manufacturing a cross-linked film by the introduction of epoxy resin to carboxylated polymer of intrinsic porosity according to the present disclosure. Additionally, as opposed to the use of polymer of intrinsic microporosity alone, by the introduction of epoxy resin that is miscible with the lithium metal anode, the anode protection film developed by the present disclosure was proved as an electrode protection layer for ensuring stable interfacial characteristics between the metal surface and the electrode protection layer, and suppressing the formation of lithium dendrite during charging and discharging based on high mechanical strength and thus the inventors completed the present disclosure.

### DISCLOSURE

### Technical Problem

The present disclosure is developed to solve the above-described problems, and therefore the present disclosure is directed to providing an electrode protection layer based on carboxylated polymer of intrinsic microporosity for achieving uniform lithium ion conductivity and improved interfacial characteristics with lithium metal, and suppressing formation and growth of lithium dendrite.

The present disclosure provides a new manufacturing method that is distinguished from the conventional PIM-1 polymer based interpenetrating polymer network (IPN) type cross-linked films and ionic cross-linked films based on polymers of intrinsic microporosity in their composition, manufacturing method and application.

### Technical Solution

To solve the above-described problems, the present disclosure provides an electrode protection layer formed by cross-linking through reaction between a homopolymer or a copolymer of a compound represented by the following Chemical Formula 1 or a mixture thereof and a cross-linking agent:

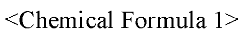

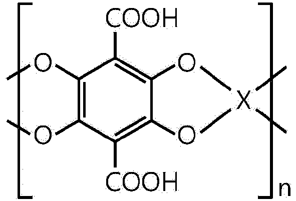

In the above Chemical Formula 1, X is any one selected from the group consisting of X1 to X17 below, and n is an integer of 10 to 500 as a repeat unit:

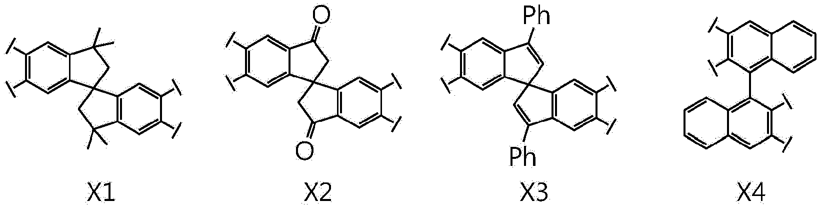

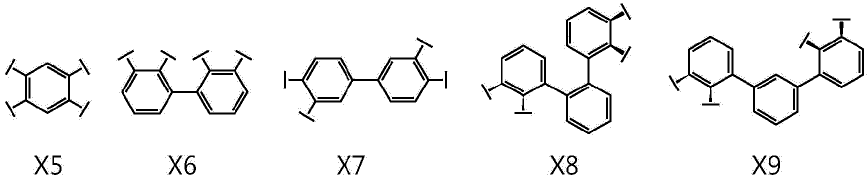

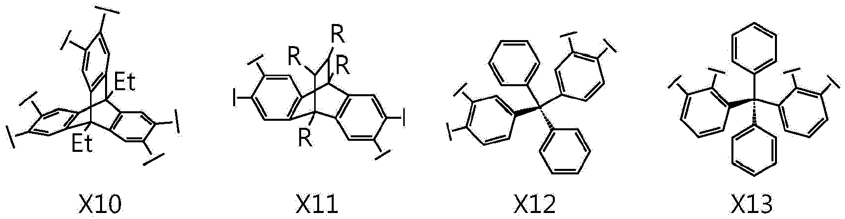

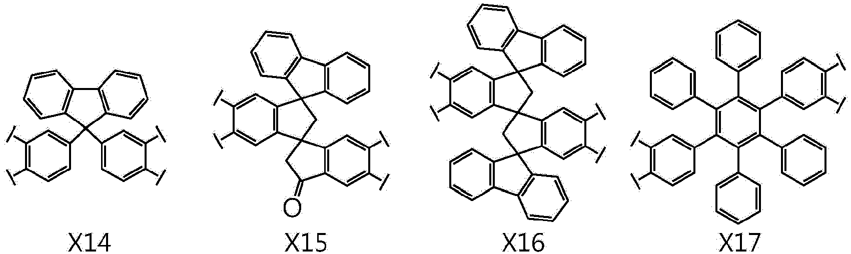

In an embodiment of the present disclosure, the cross-linking agent may have a chemical structure of the following Chemical Formula 2:

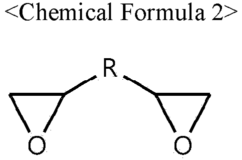

In the above Chemical Formula 2, R is any one of a straight-chained or branched alkylene group, a straight-chained or branched alkylene group including an oxygen atom, or an arylene group.

Additionally, the present disclosure provides an electrode protection layer based on carboxylated polymer of intrinsic microporosity by mixing carboxylated polymer of intrinsic microporosity with epoxy resin to prepare a composition, applying the prepared composition to electrode surface, and drying to form a cross-linked film.

Additionally, the present disclosure provides an electrochemical battery cell including an anode including the electrode protection layer; an electrolyte; and a cathode.

### Advantageous Effects

The present disclosure is a method that manufactures the cross-linked film of the combination of the carboxylated polymer of intrinsic microporosity and the epoxy compound by a straightforward method, and introduces on the surface of lithium metal which is the anode through the solution process using the same, thereby ensuring stability and long-term life of lithium metal batteries.

Based on micropores of intrinsic microporosity and ionic conductivity of ion conducting polymer, it makes uniform movement of lithium ions easy, and the outstanding interfacial characteristics between the lithium metal battery and the polymer film is achieved through appropriate combination of the polymer of intrinsic microporosity and the epoxy resin.

Additionally, the growth of lithium dendrite is also suppressed based on the outstanding mechanical properties of the manufactured cross-linked film. Based on the characteristics of the cross-linked film based on the carboxylated polymer of intrinsic microporosity and the epoxy resin as described above, life characteristics and stability of batteries in actual lithium symmetric cells or lithium full cells were confirmed, and the effects are expected in the commercial application.

### BRIEF DESCRIPTION OF THE DRAWINGS

FIG. 1 represents the results showing the outstanding interfacial characteristics of a cross-linked film for a lithium metal battery anode protection layer based on carboxylated polymer of intrinsic microporosity manufactured in Example 1 of the present disclosure.
FIG. 2 shows the lithium symmetric cell experimental results using lithium metal anode with or without a cross-linked film based on carboxylated polymer of intrinsic microporosity manufactured in Example 1 of the present disclosure.
FIGs. 3 and 4 show the electrochemical impedance spectroscopy experiment (measurement of ion conductivity and number of lithium ions moved) results of a lithium symmetric cell manufactured using lithium metal anode with a cross-linked film based on carboxylated polymer of intrinsic microporosity manufactured in Example 1 according to an embodiment of the present disclosure.
FIGs. 5 to 7 show the results about a capacity change and long-term performance test as a function of charge and discharge rate in a lithium metal secondary battery full cell manufactured using lithium metal anode and Ni83 cathode with a cross-linked film based on carboxylated polymer of intrinsic microporosity manufactured in Example 1 according to an embodiment of the present disclosure.
FIG. 8 shows interfacial characteristics observation results through SEM after casting PIM-COOH (wo PEO) on a copper foil that may be used as a current collector of a battery according to an embodiment of the present disclosure.
FIG. 9 shows interfacial characteristics observation results through SEM after casting a PIM-COOH and PEO based epoxy resin composition (PIM-COOH : PEO (1:1)) on a copper foil that may be used as a current collector of a battery.
FIG. 10 shows the comparative test results for demonstrating a difference between the conventional PIM-1 polymer based interpenetrating polymer network and the present disclosure.
FIG. 11 shows the comparative test results for demonstrating a difference between the conventional PIM-1 polymer based interpenetrating polymer network and the present disclosure.
FIG. 12 shows the X-ray diffraction (XRD) results of a PIM-COOH and PEO based epoxy resin composition according to an embodiment of the present disclosure.
FIG. 13 shows the differential scanning calorimetry (DSC) results of a PIM-COOH and PEO based epoxy resin composition according to an embodiment of the present disclosure.
FIG. 14 represents the results showing reaction between methanol used as a solvent of a cross-linking agent solution in the conventional PIM-1 polymer based interpenetrating polymer network and lithium metal corresponding to an anode of a battery.

### BEST MODE

Hereinafter, the embodiments of the present disclosure will be described in detail. The terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

"Polymer of Intrinsic Microporosity (PIM)" according to the present disclosure is polymer having a backbone of a twisted structure to form a large number of micropores (microporosity) resulting from inefficient packing of the polymer structure. Additionally, according to the definition of International Union of Pure and Applied Chemistry (IUPAC), porous materials may be classified into micropore (pore size < 2 nm), mesopore (2 nm < the pore size < 50 nm) and macropore (pore size > 50 nm) according to the pore size, and the porous material including the polymer of intrinsic porosity according to the present disclosure may include micropores and mesopores together, but primarily includes micropores of less than 2 nm.

A cross-linked film based on the carboxylated polymer of intrinsic microporosity according to the present disclosure is manufactured by mixing carboxylated polymer of intrinsic microporosity with epoxy resin as a cross-linking agent in a solution state and solution casting, and is distinguished from the existing PIM-1 polymer based interpenetrating polymer network (IPN) type cross-linked films and ionic cross-linked films manufactured by reaction of carboxylated polymer of intrinsic microporosity with aluminum ions (Polym. Sci. Ser. B 61, 795-805 (2019)) in their manufacturing method and application. The cross-linked films manufactured by the two methods were applied as an example of use for separation of aromatic hydrocarbon.

First, as opposed to reaction between PIM-COOH and epoxy resin as the cross-linking agent according to the present disclosure, the conventional PIM-1 polymer based interpenetrating polymer network cannot induce direct reaction between PIM-1 and the cross-linking agent, and induces cross-linking reaction between poly(ethyleneimine) and epoxy resin after impregnation of poly(ethyleneimine) into PIM-1 to form the PIM-1 based interpenetrating polymer network. That is, the present disclosure may only manufacture the cross-linked film by a combination of the polymer of intrinsic microporosity and the epoxy resin as the cross-linking agent, and adjust the ratio of the PIM and the cross-linking agent by a straightforward method as opposed to the related art.

Additionally, there is a difference between the present disclosure and the related art in the composition. The composition according to the present disclosure is a 1-component composition type in which the resin and the cross-linking agent co-exist in a solution state, while the related art corresponds to a 2-component composition type in which a solution including the resin and a solution including the cross-linking agent are separately stored and mixed together in the subsequent step for reaction. In most of industrial sections, development of 1-component compositions rather than 2-component compositions is required to easily use epoxy resin in various conditions, so the composition according to the present disclosure is a 1-component composition type including the resin and the cross-linking agent at the same time and is technology that achieves uniform coating and coating layer optimization, and this is because it is easier to prepare 1-component compositions in which cross-linking does not take place in the solution.

In particular, in the case of 2-component compositions in which each of the resin and the cross-linking agent is separately stored, when mixing the solutions on the spot, the chemical composition of the composition is not homogeneous, so there is a very high likelihood that the properties of the final cross-linked product will be non-uniform, but because the film manufactured by the present disclosure is a 1-component composition, the composition is homogeneous and it is very easy to adjust the thickness, thereby easily realizing the film having uniform properties, and thus superior performance in storage, application and final properties compared to the related art.

Subsequently, in the case of the conventional PIM-1 polymer based interpenetrating polymer network, in the manufacture of the film through ionic cross-linking between PIM-COOH and bivalent or trivalent ions (for example, aluminum ions), a PIM-1 polymer film is manufactured, and undergoes hydrolysis reaction until the manufactured polymer film can maintain the film shape to manufacture a PIM-COOH polymer film. For reference, the hydrolysis until the shape can be maintained provides carboxylated polymer of intrinsic microporosity having low conversion rate of 50% or less, while the present disclosure manufactures the film through the solution process after manufacturing PIM-COOH of high conversion rate of 90% or more. There is a difference between the present disclosure and the related art in the film manufacturing method.

Additionally, the related art uses the method for manufacturing the PIM-COOH based ionic cross-linked film by putting the manufactured film in an aluminum chloride (AlCl₃) solution to induce ion exchange. That is, the corresponding manufacturing method includes manufacturing the polymer film first and finally manufacturing the ionic cross-linked film through ion exchange, and is fundamentally different from the method that directly introduces the electrode protection layer onto lithium surface through solution casting presented by the present disclosure, and more specifically, the polymer film manufactured through ionic cross-linking does not dissolves well in an organic solvent, so it is difficult to directly introduce the electrode protection layer by the solution process, and the already manufactured film is introduced onto the electrode surface, and unavoidably, an empty space is formed between the interfaces between the electrode and the electrode protection layer. In contrast, the solution composition prepared by the present disclosure is directly introduced onto electrode surface, thereby improving interfacial characteristics.

Additionally, in the application of the film manufactured by the related art in the battery field, aluminum ions randomly introduced into the anode protection layer for ionic cross-linking and the remaining aluminum chloride solution may cause side reaction such as lithium aluminum alloy reaction in the battery during the operation of the electrode.

Accordingly, to solve the above-described problems, the present disclosure provides an electrode protection layer by cross-linking through reaction between a homopolymer or a copolymer of a compound represented by the following Chemical Formula 1 or a mixture thereof and a cross-linking agent:

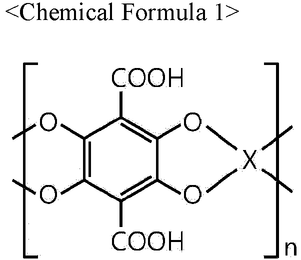

In the above Chemical Formula 1, X is any one selected from the group consisting of X1 to X17 below.

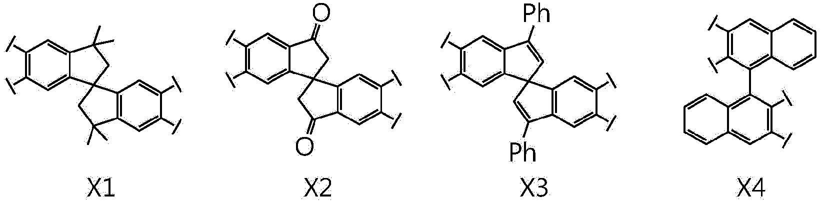

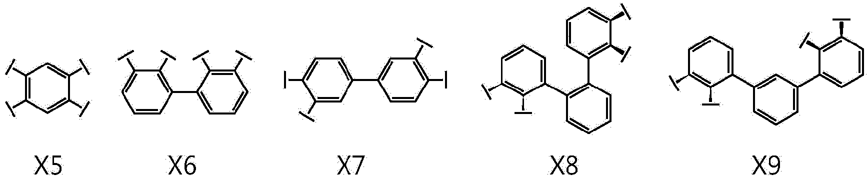

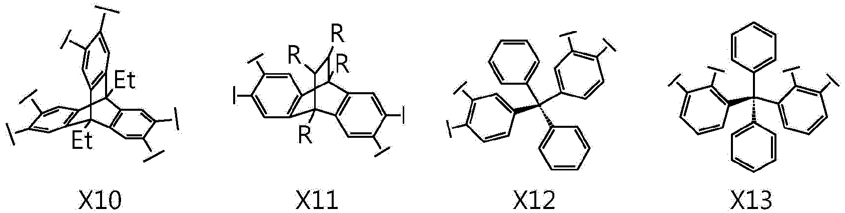

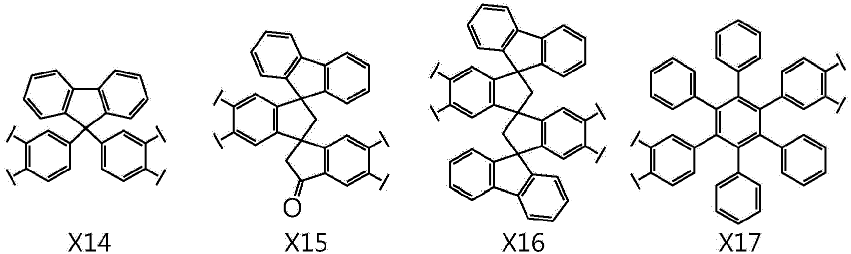

In an embodiment of the present disclosure, the cross-linking agent may have a chemical structure of the following Chemical Formula 2:

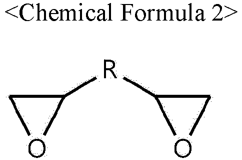

In the above Chemical Formula 2, R is any one of a straight-chained or branched alkylene group, a straight-chained or branched alkylene group including an oxygen atom, or an arylene group.

In an embodiment of the present disclosure, in the above Chemical Formula 2, R may be any one of the following Chemical Formulas.

-(CH₂)ₘ-,

-(CH₂)ₘ-O-(CH₂)₁-,

-(CH₂)ₘ-O-(CH₂)₁-,

-CH₂-O-(CH₂)₄-O-CH₂-

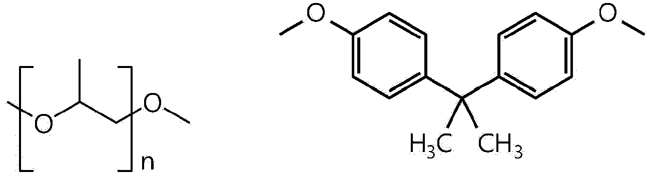

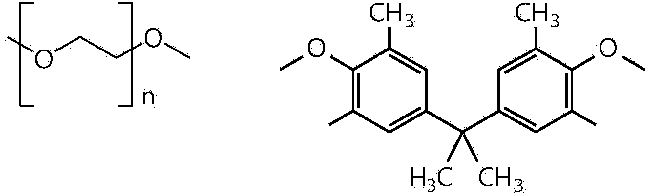

Here, m and l are equal or different and each is an integer of 1 to 6, and n is an integer between 1 and 10000.

In an embodiment of the present disclosure, the electrode protection layer may be 10 nm to 300 µm in thickness.

Additionally, the present disclosure provides an electrode including an anode; and the electrode protection layer according to any one of claims 1 to 13, coated on the anode.

In an embodiment of the present disclosure, the anode may store and release lithium ions, and the anode may be at least one selected from the group consisting of Li, Na, K, Mg, Ca, Zn, Al, Si, Ge, Sn, or an alloy thereof.

Additionally, the present disclosure provides an electrochemical battery cell including the anode; an electrolyte; and a cathode.

In an embodiment of the present disclosure, the electrochemical battery cell may further include a separator between the anode and the cathode.

Additionally, the present disclosure provides a method for forming an electrode protection layer including: an anode preparation step; a polymer providing step of providing a homopolymer or a copolymer of a compound represented by the following Chemical Formula 1 or a mixture thereof; a film-forming composition preparation step of mixing the polymer, a cross-linking agent and a solvent; a film formation step of forming a film on the anode using the film-forming composition; and a cross-linked polymer film manufacturing step of cross-linking the film.

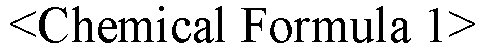

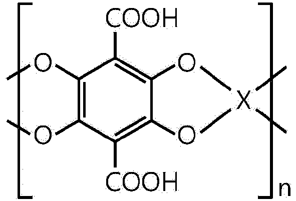

In the above Chemical Formula 1, X is any one selected from the group consisting of X1 to X17 below, and n is an integer of 10 to 500 as a repeat unit.

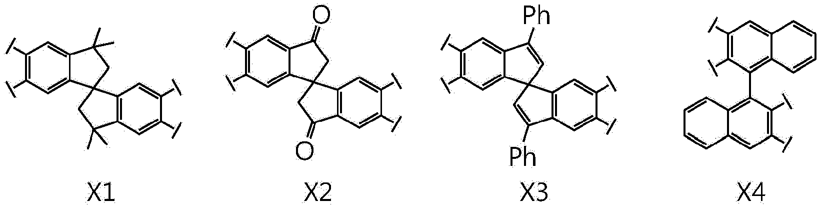

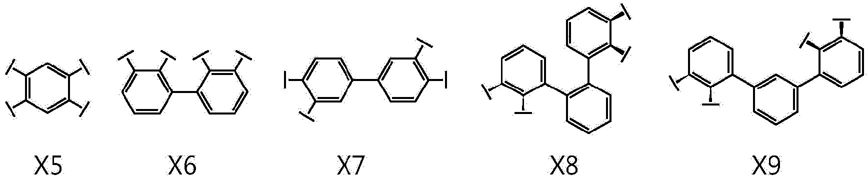

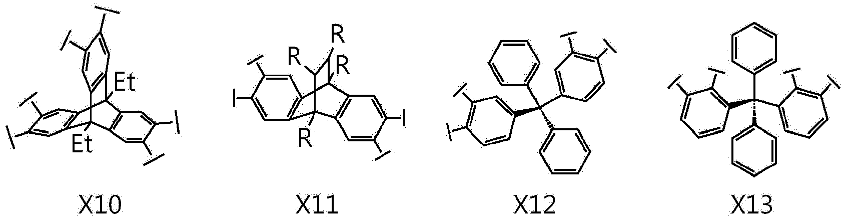

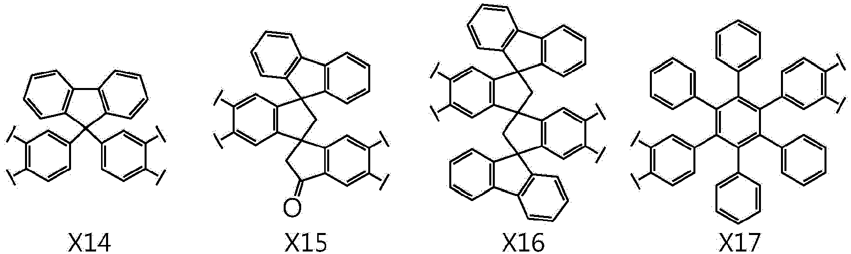

In an embodiment of the present disclosure, the cross-linking agent may have a chemical structure of the following Chemical Formula 2.

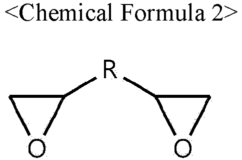

In the above Chemical Formula 2, R is any one of a straight-chained or branched alkylene group, a straight-chained or branched alkylene group including an oxygen atom, or an arylene group.

In an embodiment of the present disclosure, in the above Chemical Formula 2, R may be any one of the following Chemical Formulas.

-(CH₂)ₘ-,

-(CH₂)ₘ-O-(CH₂)₁-,

-(CH₂)ₘ-O-(CH₂)₁-,

-CH₂-O-(CH₂)₄-O-CH₂-

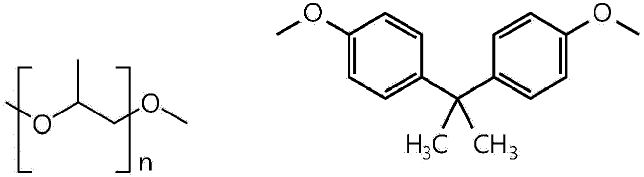

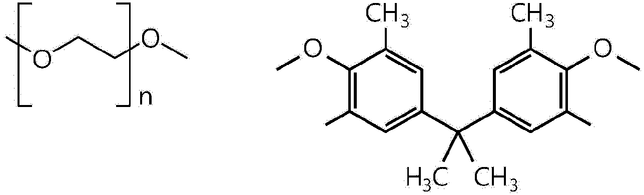

Here, m and l are equal or different and each is an integer of 1 to 6, and n is an integer between 1 and 10000.

In an embodiment of the present disclosure, the solvent may be at least one selected from the group consisting of tetrahydrofuran (THF), N-methylpyrrolidone (NMP), dimethyl sulfoxide (DMSO), dimethylformamide (DMF) and dimethylacetamide (DMAc).

In an embodiment of the present disclosure, the cross-linked polymer film manufacturing step of cross-linking the film may be performed through reaction of the following Reaction Formula 1:

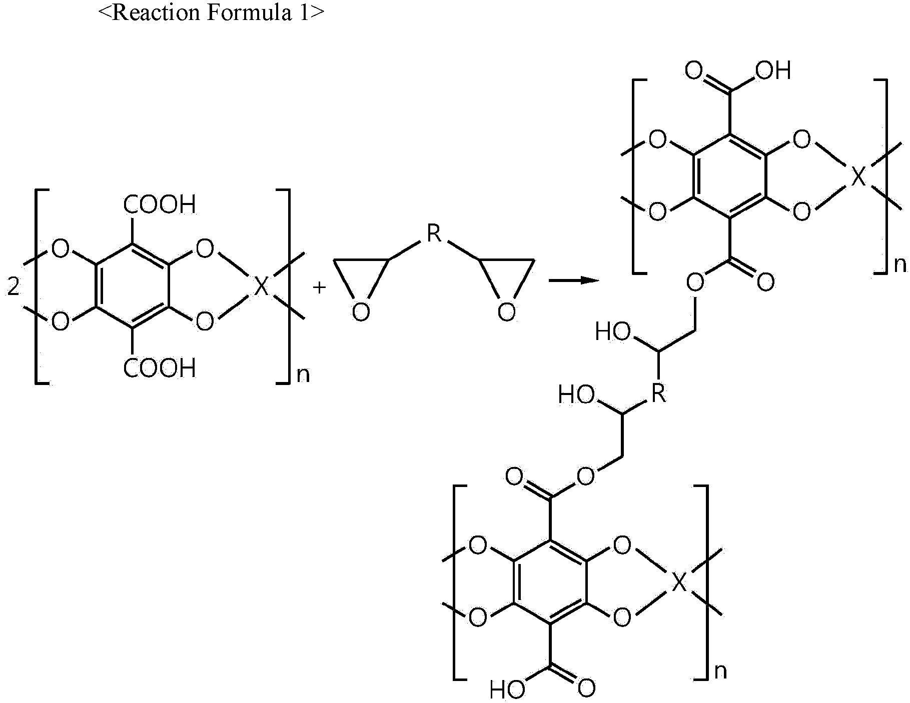

In the above Reaction Formula 1, n is an integer of 10 to 500 as a repeat unit, and R is any one of a straight-chained or branched alkylene group, a straight-chained or branched alkylene group including an oxygen atom, or an arylene group.

Hereinafter, exemplary embodiments and examples of the present disclosure will be described with reference to the accompanying drawings in sufficient detail for persons having ordinary skill in the technical field pertaining to the present disclosure to easily carry out the invention. In particular, the technical aspect of the present disclosure and the essential components and their functions are not limited thereto. Additionally, the present disclosure may be embodied by many other devices, and is not limited to the disclosed embodiments and examples.

### <Preparation Example 1> Manufacture of Polymer of Intrinsic Microporosity (PIM)

After removing moisture from the inside of a 2-neck round-bottom flask (250 ml), under a nitrogen atmosphere, 5.5',6,6'-tetrahydroxy-3,3,3',3'-tetramethyl-1,1'-spirobiindan (TTSBI)(10.21 g, 30 mmol), K₂CO₃(8.29 g, 60 mmol), tetrafluorophtalonitrile (TFTPN)(6.00 g, 30 mmol) and dimethylformamide (DMF)(210 ml) were added to the flask, to facilitate polymerization at 55°C for 72 hours. After the end of the reaction, 350 ml of tetrahydrofuran (THF) was added to a reactor cooled to room temperature, to cause precipitation of high molecular weight PIM-1 and a supernatant including low molecular weight and oligomer was removed. The polymer was re-dissolved in tetrahydrofuran (THF) and re-precipitation using methanol was repeated twice. The final product was dried in a vacuum to obtain a yellow polymer of intrinsic microporosity (PIM-1)(10.3 g) represented by the following Chemical Formula 3. Gel permeation chromatography (GPC) measurement result shows Mₙ=60,900, and polydispersity index (PDI) of 1.58.

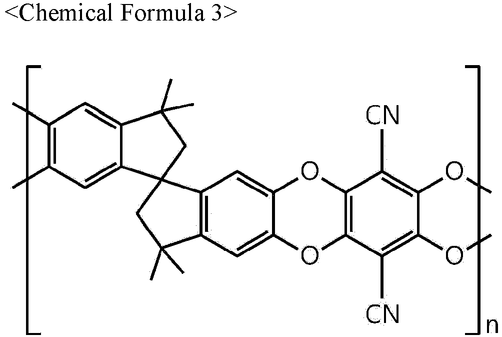

### <Preparation Example 2> Manufacture of carboxylated polymer of intrinsic microporosity (PIM-COOH)

480 ml of distilled water, 600 ml of ethanol and 240 g of NaOH were added to a 3-neck round-bottom flask (2000 ml) to prepare 20 weight% of NaOH solution, and modified at 125°C for 360 hours with an addition of the polymer of intrinsic microporosity (PIM-1) obtained in Preparation Example 1. After the end of the reaction, leaving it untouched to separate an aqueous layer and an organic layer using a liquid-liquid separator, the organic layer including the modified polymer of intrinsic microporosity was separated, followed by slowly precipitation in about 5 weight% of HCl solution and filtration. After washing with distilled water multiple times, the filtered product was dried for 24 hours in a vacuum dryer of which temperature was adjusted to 60°C, and dissolved in tetrahydrofuran (THF), causing re-precipitation using water and methanol repeatedly twice. The final product was dried in vacuum to obtain a yellow carboxylated polymer of intrinsic microporosity (PIM-1)(7.0 g) of the following Chemical Formula 4. The GPC measurement result shows Mₙ=25,700, and PDI of 1.07.

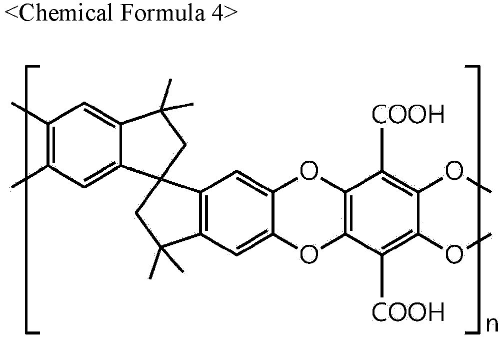

### <Example 1> Manufacture of polymer cross-linked film for lithium metal battery anode protection layer including carboxylated polymer of intrinsic microporosity

To manufacture a polymer cross-linked film for an anode protection layer, the carboxylated polymer of intrinsic microporosity (PIM-COOH) prepared in Preparation Example 2 was mixed with poly(ethylene glycol) diglycidyl ether (*Mn =* 500) at a mass ratio of 1:2. 1:1 or 2:1. Tetrahydrofuran (THF) was added to the mixture to fix the concentration of the solution to 12.5 mg mL⁻¹. The prepared polymer solution was injected onto lithium metal while filtering out impurities with a 5 µm syringe filter. To remove the solvent from the injected polymer solution, drying was performed at room temperature for 12 hours or more. All the steps were performed in a glove box filled with argon. The polymer cross-linked film for the anode protection layer including carboxylated polymer of intrinsic microporosity having a thickness of 10 µm to 100 µm was manufactured by the above-described method.

### <Comparative Example 1> Manufacture of film of carboxylated polymer of intrinsic microporosity

To manufacture a cross-linked film of carboxylated polymer of intrinsic microporosity, a polymer solution with 12.5 mg mL⁻¹ was prepared using PIM-COOH prepared in Preparation Example 2 and tetrahydrofuran (THF). The prepared polymer solution was injected onto lithium metal while filtering out impurities using a 5 µm syringe filter. Under ambient atmosphere, the solvent was slowly evaporated for two days, and the dried film was separated from a glass petri dish. Drying was performed in a vacuum dryer adjusted to 100°C for 24 hours. The film of carboxylated polymer of intrinsic microporosity having a thickness of 10 µm to 100 µm was manufactured by the above-described method.

### <Analysis Example 1> Lithium (Li-Li) symmetric cell test

Two lithium metal electrodes coated with the polymer cross-linked film including the carboxylated polymer of intrinsic microporosity prepared in Example 1 according to the present disclosure are assembled into 2032 coin cell type (conducted in an argon glove box). Celgard 2500 and an ethylene carbonate (EC): diethyl carbonate (DEC) (1:1, v/v%) electrolyte containing 1M LiPF₆ including fluoroethylene carbonate (FEC, 10 w/w%) and vinylene carbonate (VC, 1 w/w%) were used.

### <Analysis Example 2> Measurement of ion conductivity and number of lithium ions moved

Electrochemical impedance spectroscopy (EIS) was conducted in a range between 300 kHz and 1 Hz. A lithium electrode including the PIM-COOH/PEO cross-linked film or an electrode without the PIM-COOH/PEO cross-linked film was used to manufacture a Li-Li symmetric cell and an experiment was performed.

### <Analysis Example 3> Electrochemical experiment of lithium full cell

A lithium metal electrode coated with the polymer cross-linked film including the carboxylated polymer of intrinsic microporosity prepared in Example 1 according to the present disclosure was used as an anode, Ni83 was used as a cathode material and they were assembled into 2032 coin cell type (conducted in an argon glove box). A charging and discharging experiment was performed in a voltage range between 3.0V and 4.3V using a charger/di scharger.

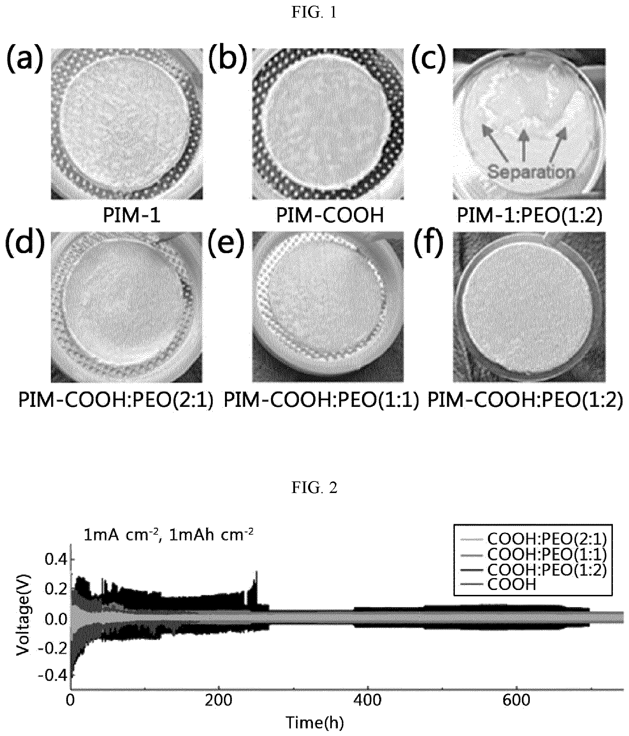

FIG. 1 represents the results showing the interfacial characteristics of the cross-linked film for the lithium metal battery anode protection layer based on the carboxylated polymer of intrinsic microporosity manufactured in Example 1 according to an embodiment of the present disclosure. Samples presented in FIG. 1 are as follows: (a) PIM-1 (b) PIM-COOH (c) PIM-1:PEO (1:2) (d) PIM-COOH:PEO (2:1) (e) PIM-COOH:PEO (1:1) (f) PIM-COOH:PEO (1:2). (a) PIM-1 and (b) PIM-COOH are films formed by coating the corresponding solution on electrode surface, but not inducing cross-linking involving solvent drying at room temperature. (c) PIM-1:PEO (1:2) film is a film introduced by the above method, and as opposed to the (d-f) samples, is a simply mixed PIM-1 and PEO epoxy blended film without inducing cross-linking. In this case, as opposed to the cross-linking induced film, separation of the film for anode protection layer from the electrode was observed. (d-f) samples are films formed by mixing PIM-COOH with a PEO based epoxy compound at a weight ratio of 2:1, 1:1, 1:2, coating on electrode surface and inducing cross-linking involving solvent drying at room temperature.

Referring to FIG. 1, in the case of unmodified PIM-1, it was confirmed that exfoliation occurred. In contrast, the cross-linked film of carboxylated polymer of intrinsic microporosity or a combination of carboxylated polymer of intrinsic microporosity and epoxy resin shows good interfacial characteristics and a phenomenon such as exfoliation is not observed. Accordingly, the polymer cross-linked film having optimized interfacial characteristics with the lithium metal anode was manufactured through the carboxylated polymer of intrinsic microporosity or the combination of the carboxylated polymer of intrinsic microporosity and the epoxy resin.

FIG. 2 is a graph showing the the lithium symmetric cell experimental results using the lithium metal anode with or without the cross-linked film based on the carboxylated polymer of intrinsic microporosity prepared in Example 1 according to an embodiment of the present disclosure. In FIG. 2, each of COOH:PEO (1:2), (1:1) and (2:1) refers to a cross-linked film manufactured by mixing carboxylated polymer of intrinsic microporosity (PIM-COOH) with poly(ethylene glycol) diglycidyl ether (*Mn =* 500) at a mass ratio of 1:2. 1:1 or 2:1, and COOH refers to carboxylated polymer of intrinsic microporosity (PIM-COOH).

As can be seen from FIG. 2, it was confirmed that compared to the cross-linked film of carboxylated polymer of intrinsic microporosity (-COOH) that did not undergo cross-linking with epoxy resin(poly(ethylene glycol) diglycidyl ether (PEO), the cross-linked film that has undergone cross-linking shows superior long-term life characteristics in the lithium symmetric cell results. As can be seen from FIG. 1, it is thought that exfoliation or its consequential additional side reaction does not occur during the operation of the battery due to the superior interfacial characteristics with the lithium metal anode based on the carboxyl group and hydroxyl contained in the polymer film.

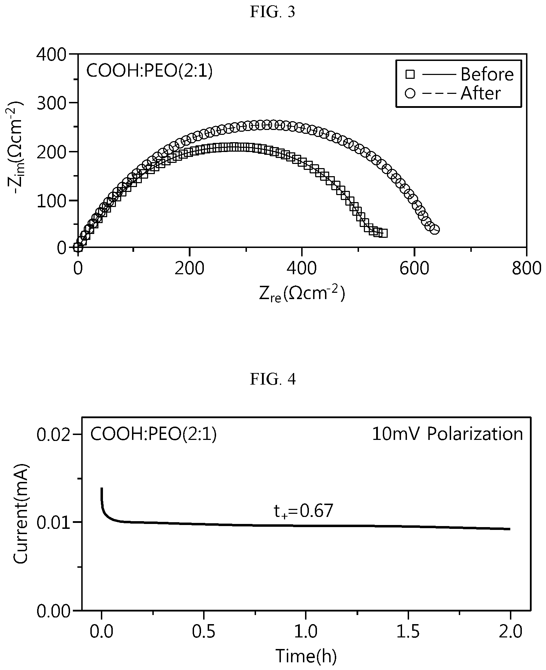

FIGs. 3 and 4 show the measurement results of ion conductivity and number of lithium ions moved through the electrochemical impedance spectroscopy experiment of the lithium symmetric cell manufactured using the lithium metal anode with the cross-linked film as a protection layer, manufactured by mixing the carboxylated polymer of intrinsic microporosity prepared in Example 1 according to an embodiment of the present disclosure with poly(ethylene glycol) diglycidyl ether at a mass ratio 2: 1, respectively.

As can be seen from FIGs. 3 and 4, because the cross-linked film based on carboxylated polymer of intrinsic microporosity includes a combination of micropores favorable for movement of lithium ions and polymer in which ions can move, compared to lithium ion mobility of 0.2 to 0.4 level in commercially available liquid electrolytes, it shows high lithium ion mobility of 0.67. The cross-linked film based on carboxylated polymer of intrinsic microporosity based on the high lithium ion mobility achieves uniform electricity application, not local electricity application, and lithium ion movement during fast charging and discharging based on fast lithium ion movement.

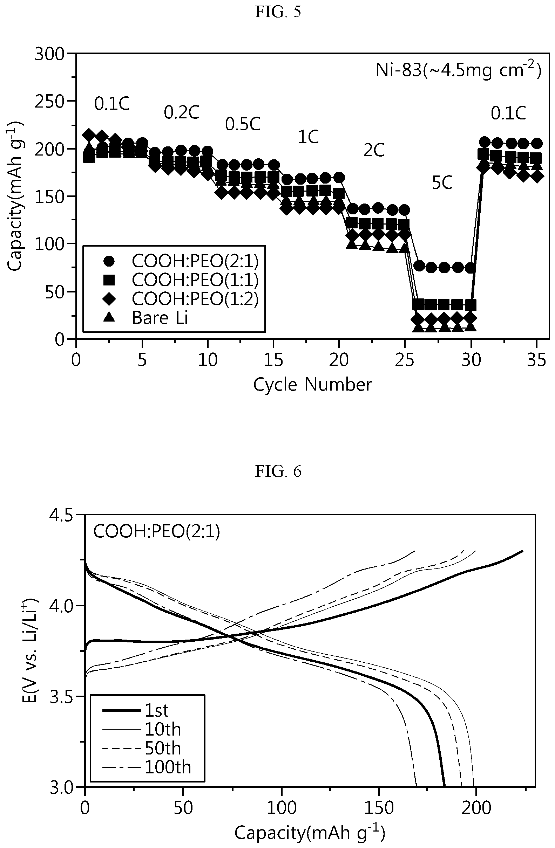

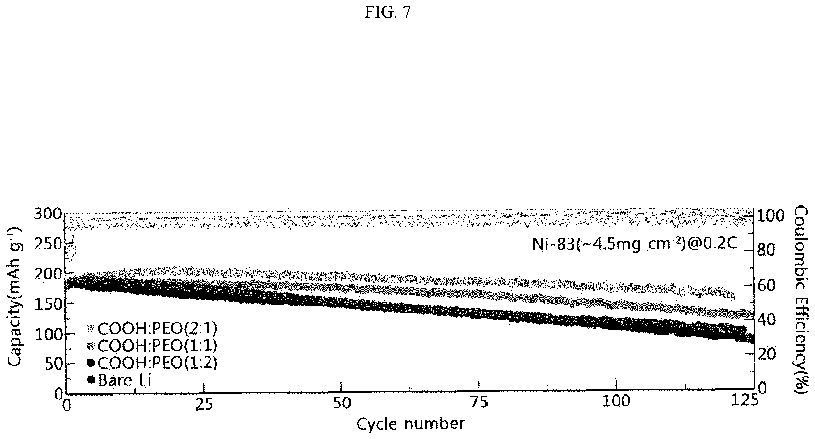

Each of FIGs. 5 to 7 shows the results about capacity change and long-term performance test as a function of the charge and discharge rate in the lithium metal secondary battery full cell manufactured using the Ni83 cathode and the lithium metal anode with the cross-linked film as a protection layer with varying composition of the carboxylated polymer of intrinsic microporosity prepared in Example 1 according to an embodiment of the present disclosure and poly(ethylene glycol) diglycidyl ether at a mass ratio 2:1, 1:1 and 1:2. As can be seen from FIG. 5, the introduction of the cross-linked film based on carboxylated polymer of intrinsic microporosity as described above does not cause significant capacity decline during fast charging and discharging. It is thought that this is because lithium ions smoothly move through the introduced cross-linked film. Additionally, as can be seen from FIG. 6, it was confirmed that there was no significant capacity decline after charging and discharging in 100 cycles or more. The full cell performance results of FIG. 7 show superior capacity maintain characteristics and Coulombic efficiency of the cell with the electrode protection film compared to the lithium metal anode without the cross-linked film. Presumably, this is because the introduced cross-linked film protects the lithium metal anode, thereby suppressing side reaction with the electrolyte during the operation of the battery and capacity decline caused by dead lithium.

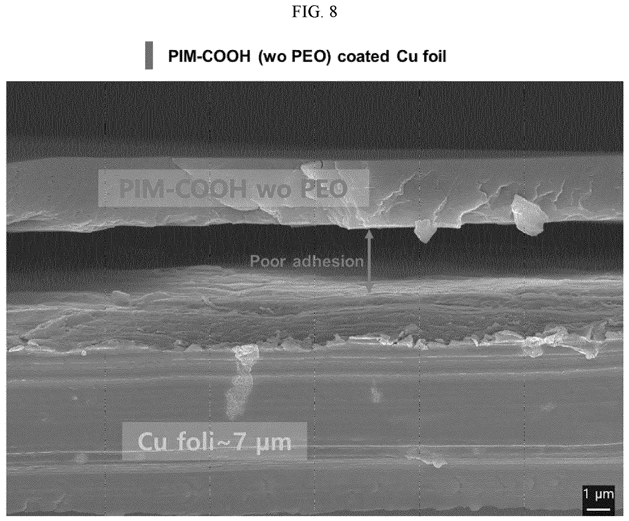

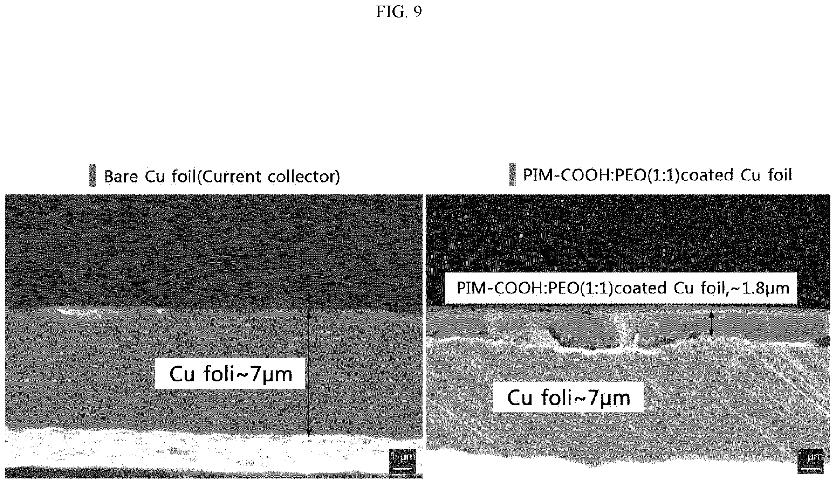

FIGs. 8 and 9 show the interfacial characteristics observation results through SEM after casting PIM-COOH (wo PEO) and PIM-COOH and PEO based epoxy resin composition (PIM-COOH : PEO (1:1)) on a copper foil that may be used as a current collector of a battery according to an embodiment of the present disclosure, respectively. In the case of solution casting of the solution composition (PIM-COOH (wo PEO)) including only PIM-COOH without introducing the epoxy resin, as can be seen from FIG. 8, a large empty space between the polymer film and the copper foil is observed, while in FIG. 9, an empty space between the copper foil and the polymer electrode protection film is not found due to the additional introduction of the epoxy resin (PIM-COOH : PEO (1:1)). That is, the outstanding interfacial characteristics that cannot be achieved by the existing polymer of intrinsic microporosity alone were realized through the introduction of the PEO based epoxy resin.

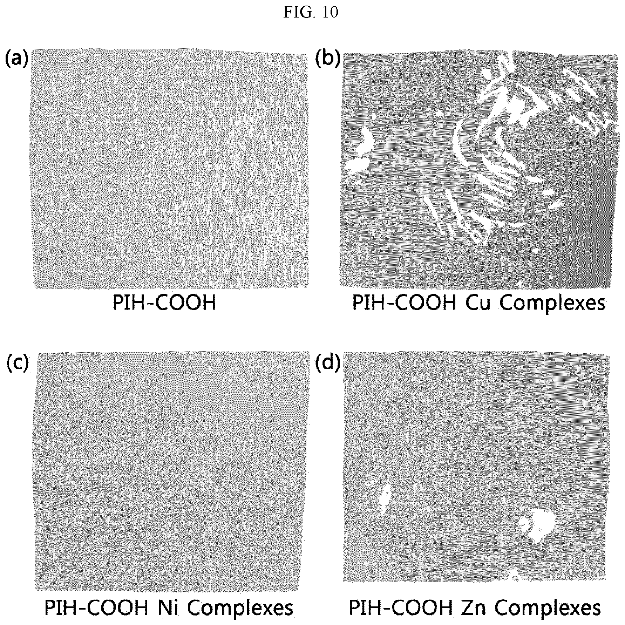

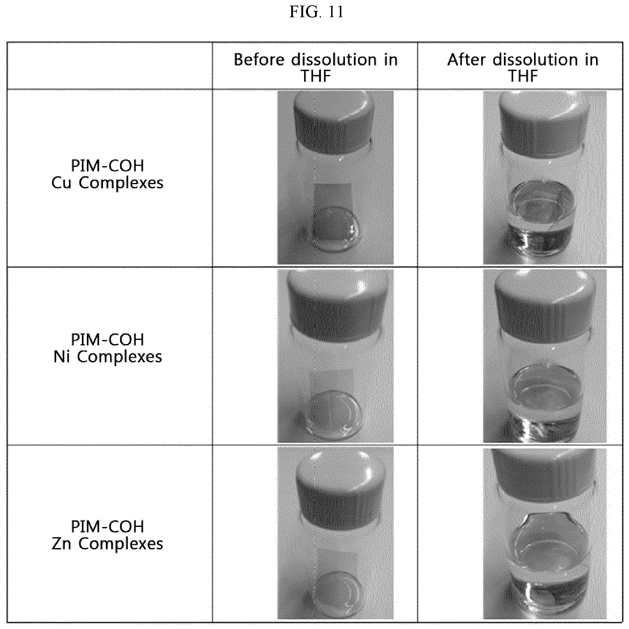

FIGs. 10 and 11 show the comparative test results for demonstrating a difference between the conventional PIM-1 polymer based interpenetrating polymer network and the present disclosure, and are a result of ionic cross-linking in an aqueous solution including bivalent cations (Cu²⁺, Ni²⁺, Zn²⁺) by post-processing after manufacturing the PIM-COOH polymer film through the solution casting method. Samples presented in FIG. 10 are as follows: (a) PIM-COOH (b) PIM-COOH Cu complexes (c) PIM-COOH Ni complexes (d) PIM-COOH Zn complexes.

As can be seen from FIG. 11, the polymer cross-linked films that have completed ionic cross-linking are difficult to dissolve using a solvent such as THF. It signifies that the conventional method for manufacturing a PIM-COOH based ionic cross-linked film including forming a film and putting the film in an aluminum chloride (AlCl₃) solution to induce ion exchange fails to manufacture the electrode protection film through the solution casting method after dissolving the polymer composition as presented by the present disclosure.

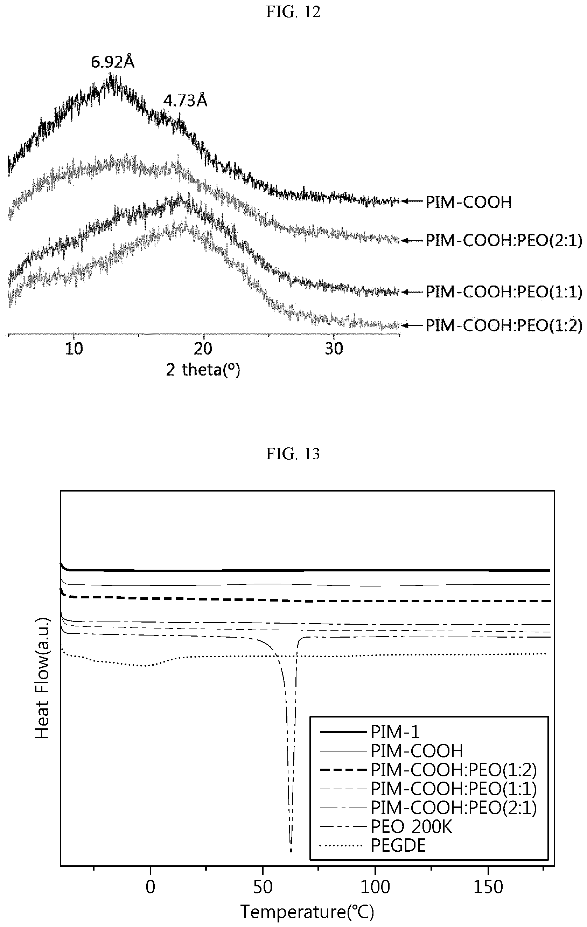

FIG. 12 shows the X-ray diffraction (XRD) results of the PIM-COOH and PEO based epoxy resin composition according to an embodiment of the present disclosure. In general, it is known that pure PEO shows two strong peaks for (120) and (112) at 19.36 and 23.72°. However, as can be seen from FIG. 12, peaks by crystal formation of PEO are not observed in the results of the PIM-COOH and PEO based epoxy resin composition. This signifies that PEO chains in the PIM-COOH and PEO based epoxy resin composition are an amorphous form favorable for lithium movement, not a crystalline form that hinders the movement of lithium ions.

FIG. 13 shows the differential scanning calorimetry (DSC) results of the PIM-COOH and PEO based epoxy resin composition according to an embodiment of the present disclosure. As can be seen from FIG. 13, in the case of pure PEO (PEO 200K), a dissolution peak is observed at 62.8°C due to the crystal parts included in the pure PEO, while in the case of the PIM-COOH and PEO based epoxy composition, a dissolution peak by PEO is not observed. This signifies that in the PIM-COOH and PEO based epoxy composition, PEO does not form a crystal in the polymer composition as can be seen from the XRD results.

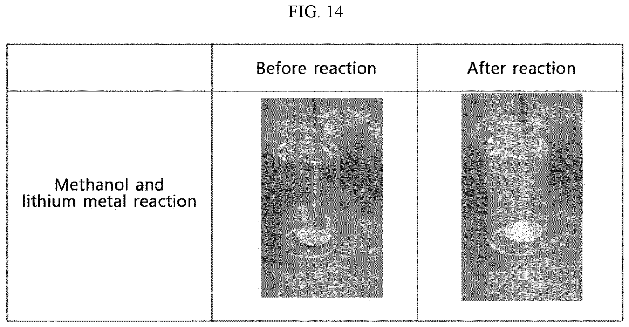

FIG. 14 represents the results showing reaction between methanol used as the solvent of the cross-linking agent solution in the conventional PIM-1 polymer based interpenetrating polymer network and lithium metal corresponding to the anode of the battery.

In the case of the conventional PIM-1 polymer based interpenetrating polymer network, methanol is used to dissolve the epoxy resin, and when the method described in the corresponding related art is used to manufacture the protection layer of lithium metal which is the anode of the battery, violent reaction between methanol and lithium metal occurs, causing corrosion of the lithium metal and forming lithium methoxide in irreversible form, and thus the film manufacturing method described in the corresponding technology cannot be directly applied in the battery field.

## Claims

1. An electrode protection layer formed by cross-linking through reaction between a homopolymer or a copolymer of a compound represented by the following Chemical Formula 1 or a mixture thereof and a cross-linking agent: 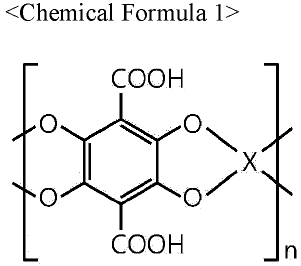 wherein in the above Chemical Formula 1, X is any one selected from the group consisting of X1 to X17 below:

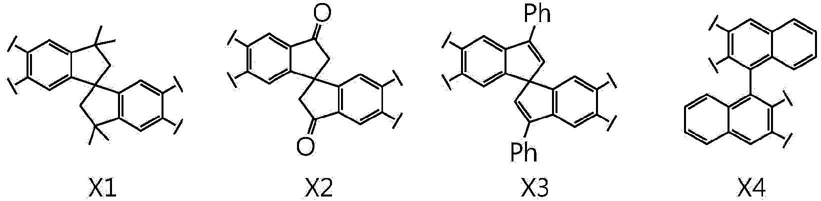

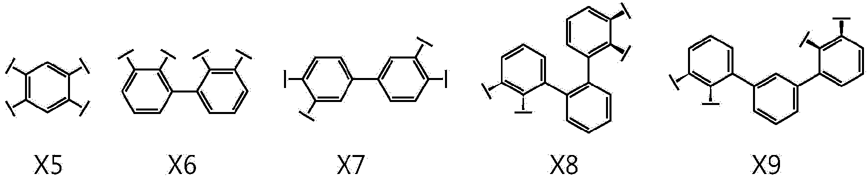

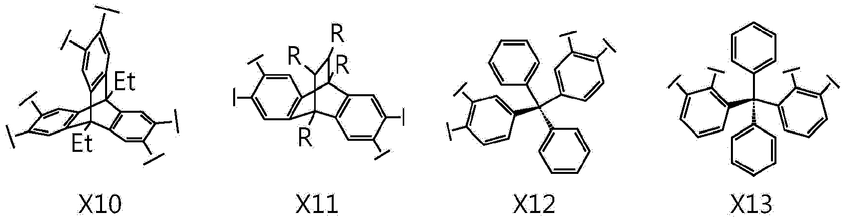

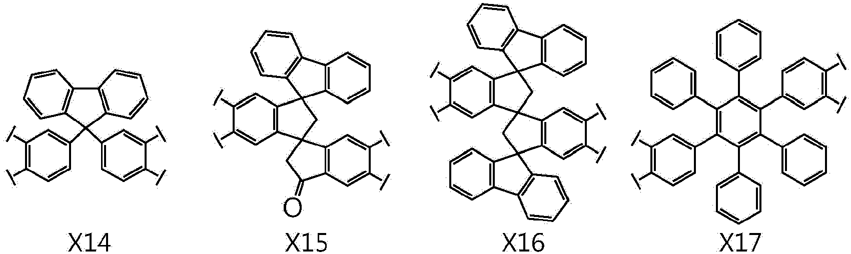

2. The electrode protection layer according to claim 1,
wherein the cross-linking agent has a chemical structure of the following Chemical Formula 2: 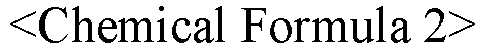 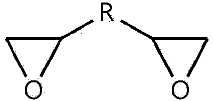
wherein in the above Chemical Formula 2, R is any one of a straight-chained or branched alkylene group, a straight-chained or branched alkylene group including an oxygen atom, or an arylene group.

3. The electrode protection layer according to claim 2,
wherein in the above Chemical Formula 2, R is any one of the following Chemical Formulas:
-(CH₂)ₘ-,
-(CH₂)ₘ-O-(CH₂)₁-,
-(CH₂)ₘ-O-(CH₂)₁-,
-CH₂-O-(CH₂)₄-O-CH₂- 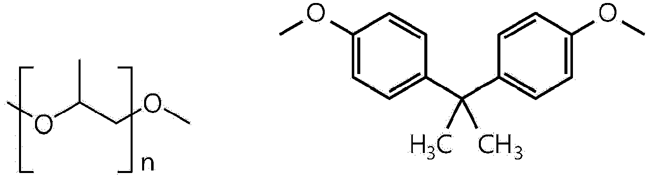 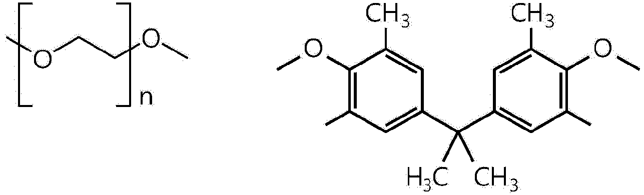
wherein m and l are equal or different and each is an integer of 1 to 6, and n is an integer between 1 and 10000.

4. An electrode comprising:
an anode; and
the electrode protection layer according to any one of claims 1 to 13, coated on the anode.

5. The electrode according to claim 4,
wherein the anode is capable of storing and releasing lithium ions.

6. The electrode according to claim 4,
wherein the anode is at least one selected from the group consisting of Li, Na, K, Mg, Ca, Zn, Al, Si, Ge, Sn, or an alloy thereof.

7. An electrochemical battery cell comprising:
the electrode according to any one of claims 4 to 6 as the anode;
an electrolyte; and
a cathode.

8. The electrochemical battery cell according to claim 7, further comprising:
a separator between the anode and the cathode.

9. A method for forming an electrode protection layer, comprising:
an anode preparation step;
a polymer providing step of providing a homopolymer or a copolymer of a compound represented by the following Chemical Formula 1 or a mixture thereof;
a film-forming composition preparation step of mixing the polymer, a cross-linking agent and a solvent;
a film formation step of forming a film on the anode using the film-forming composition; and
a cross-linked polymer film manufacturing step of cross-linking the film: 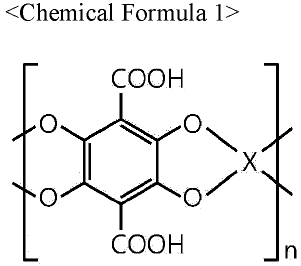
wherein in the above Chemical Formula 1, X is any one selected from the group consisting of X1 to X17 below, and n is an integer of 10 to 500 as a repeat unit:

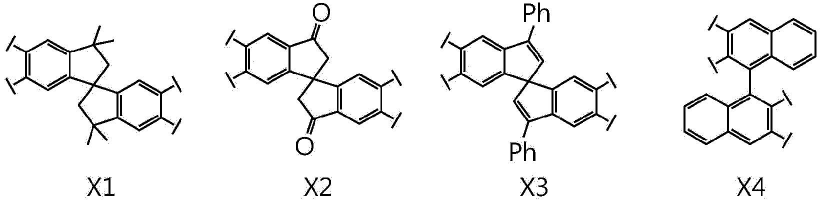

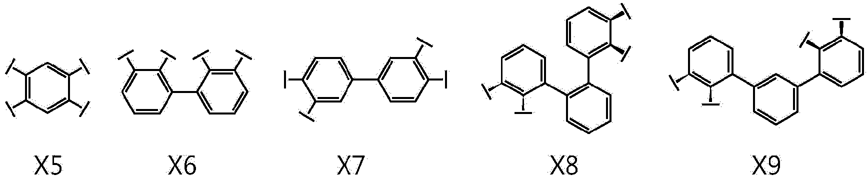

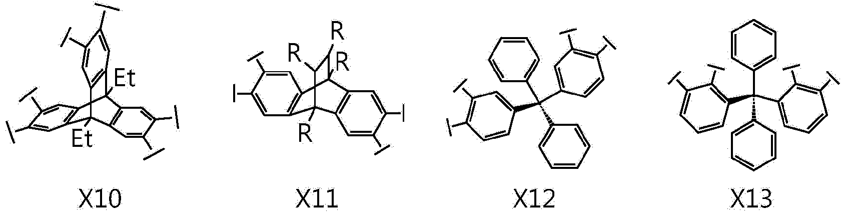

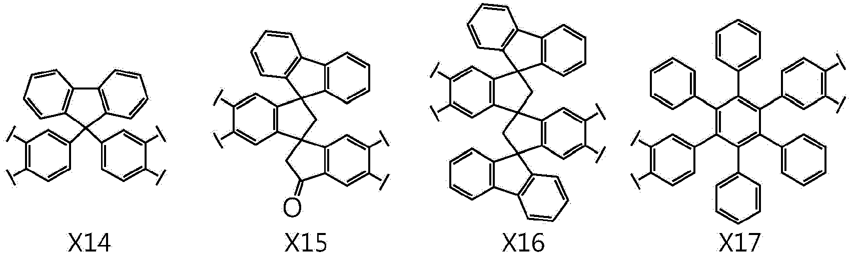

10. The method for forming the electrode protection layer according to claim 9,
wherein the cross-linking agent has a chemical structure of the following Chemical Formula 2: 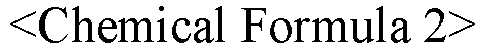 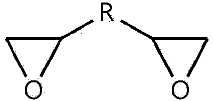
wherein in the above Chemical Formula 2, R is any one of a straight-chained or branched alkylene group, a straight-chained or branched alkylene group including an oxygen atom, or an arylene group.

11. The method for forming the electrode protection layer according to claim 9,
wherein in the above Chemical Formula 2, R is any one of the following Chemical Formulas:
-(CH₂)ₘ-,
-(CH₂)ₘ-O-(CH₂)₁-,
-(CH₂)ₘ-O-(CH₂)₁-,
-CH₂-O-(CH₂)₄-O-CH₂- 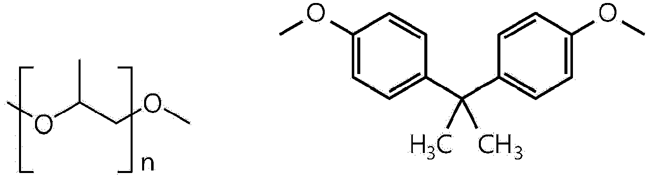 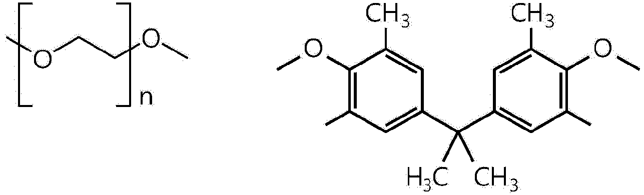
wherein m and l are equal or different and each is an integer of 1 to 6, and n is an integer between 1 and 10000.

12. The method for forming the electrode protection layer according to claim 9,
wherein the solvent comprises at least one selected from the group consisting of tetrahydrofuran (THF), N-methylpyrrolidone (NMP), dimethyl sulfoxide (DMSO), dimethylformamide (DMF) and dimethylacetamide (DMAc).

13. The method for forming the electrode protection layer according to claim 9,
wherein the cross-linked polymer film manufacturing step of cross-linking the film is performed through reaction of the following Reaction Formula 1: 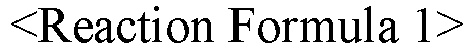 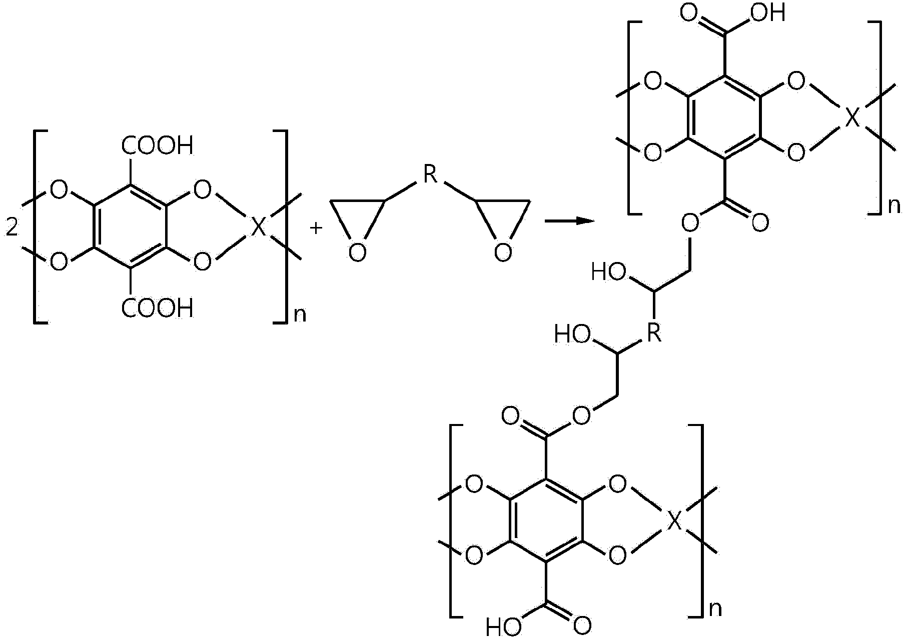
wherein in the above Reaction Formula 1, n is an integer of 10 to 500 as a repeat unit, and R is any one of a straight-chained or branched alkylene group, a straight-chained or branched alkylene group including an oxygen atom, or an arylene group.
